# EUROPEAN PATENT APPLICATION

(11) **EP 4 694 223 A1**
(43) Date of publication of application: **11.02.2026**
(21) Application number: 23931562.5
(22) Date of filing: 07.04.2023
(51) Int. Cl.: H04W 4/40

(54) **PERCEPTION AUTHORIZATION METHODS, AND DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); WANG, Yaxin, Dongguan, Guangdong 523860 (CN)
(74) Representative: Mewburn Ellis LLP
(86) International application number: PCT/CN2023/087081
(87) International publication number: WO 2024/207501

(57) **Abstract**

Provided in the embodiments of the present application are perception authorization methods and a device. A perception authorization method comprises: a first device sends first authorization information of a first article to a first network element, the first authorization information of the first article comprising at least one of the following: feature information of the first article, first request information, subscription information of the first article, and identification information and/or a first indication of the first article. The present application can protect the privacy of perception objects or non-perception target objects within perception ranges.

## Description

### TECHNICAL FIELD

The present disclosure relates to the field of communications, and in particular, to a sensing authorization method and a sensing authorization device.

### BACKGROUND

Wireless electromagnetic wave signals employed in a cellular network have an environmental sensing capability, and therefore, the sensing capability can be supported in a communication network, such as achieving sensing by using a sensing function network element. Since sensing data involves privacy, how to protect privacy of an object of a sensing target or a non-sensing target within a sensing range is a technical problem to be addressed.

### SUMMARY

Embodiments of the present disclosure provide a plurality of sensing authorization methods and devices, which may be capable of protecting privacy of a sensing target object or a non-sensing target object within a sensing range.

The embodiments of the present disclosure provide a sensing authorization method, which includes:
transmitting, by a first device, first authorization information of a first object to a first network element, where the first authorization information of the first object includes at least one of:
characteristic information of the first object;
first request information;
subscription information of the first object; or
identification information of the first object and/or a first indication of the first object.

The embodiments of the present disclosure further provide a sensing authorization method, which includes:
receiving, by a first network element, first authorization information of a first object, where the first authorization information of the first object includes at least one of:
characteristic information of the first object;
first request information;
subscription information of the first object; or
identification information of the first object and/or a first indication of the first object.

The embodiments of the present disclosure further provide a sensing authorization method, which includes:
obtaining, by a sensing network element, second authorization information of a first object, where the second authorization information of the first object includes at least one of:
characteristic information of the first object;
sensing measurement data of the first object;
a sensing prohibition indication of the first object;
subscription information of the first object; or
a first indication of the first object.

The embodiments of the present disclosure further provide a sensing authorization method, which includes:
transmitting, by a terminal device, a sensing prohibition indication of the terminal device and/or identification information of the terminal device in response to receiving a sensing signal.

The embodiments of the present disclosure further provide a first device, which includes:
a first transmitting module, configured to transmit first authorization information of a first object to a first network element, where the first authorization information of the first object includes at least one of:
characteristic information of the first object;
first request information;
subscription information of the first object; or
identification information of the first object and/or a first indication of the first object.

The embodiments of the present disclosure further provide a first network element, which includes:
a first receiving module, configured to receive first authorization information of a first object, where the first authorization information of the first object includes at least one of:
characteristic information of the first object;
first request information;
subscription information of the first object; or
identification information of the first object and/or a first indication of the first object.

The embodiments of the present disclosure further provide a sensing network element, which includes:
an obtaining module, configured to obtain second authorization information of a first object, where the second authorization information of the first object includes at least one of:
characteristic information of the first object;
sensing measurement data of the first object;
a sensing prohibition indication of the first object;
subscription information of the first object; or
a first indication of the first object.

The embodiments of the present disclosure further provide a terminal device, which includes:
a fourth transmitting module, configured to transmit a sensing prohibition indication of the terminal device and/or identification information of the terminal device in response to receiving a sensing signal.

The embodiments of the present disclosure further provide a communication device, which includes a processor, a memory and a transceiver, where the memory is configured to store a computer program, and the processor is configured to invoke and run a computer program stored in the memory and control the transceiver to enable the device to perform the above methods.

The embodiments of the present disclosure further provide a chip for implementing the above methods.

Specifically, the chip includes a processor, configured to invoke a computer program from a memory and run the computer program, to enable a device equipped with the chip to perform the above methods.

Embodiments of the present disclosure further provide a computer-readable storage medium, configured to store a computer program, and the computer program, when executed by a device, enables the device to perform the above method.

Embodiments of the present disclosure further provide a computer program product, which includes computer program instructions, and the computer program instructions enable a computer to perform the above methods.

Embodiments of the present disclosure further provide a computer program which, when run on a computer, enables the computer to perform the above methods.

In the embodiments of the present disclosure, the first device transmitting the first authorization information of the first object to the first network element may enable authorize whether the first object is permitted to be sensed, thereby providing a certain degree of privacy protection.

### BRIEF DESCRIPTION OF THE DRAWINGS

FIG. 1 is a schematic diagram illustrating an application scenario of embodiments of the present disclosure.
FIG. 2 exemplarily illustrates an architecture diagram of a 5G network system.
FIG. 3 is a schematic diagram of a sensing procedure triggered by an application function (AF).
FIG. 4 is a schematic diagram illustrating a sensing scenario.
FIG. 5 is a schematic flowchart of a sensing authorization method 500 in accordance with the embodiments of the present disclosure.
FIG. 6 is a flowchart of a registration procedure of object-related information in accordance with the embodiments of the present disclosure.
FIG. 7 is a schematic flowchart of a sensing authorization method 700 in accordance with the embodiments of the present disclosure.
FIG. 8 is a flowchart illustrating an implementation of deleting data of an object prohibited from being sensed after sensing measurement data is obtained in accordance with the embodiments of the present disclosure.
FIG. 9 is a flowchart illustrating another implementation of deleting data of an object prohibited from being sensed after sensing measurement data is obtained in accordance with the embodiments of the present disclosure.
FIG. 10A is a flowchart illustrating an implementation of determining whether to terminate a sensing task based on identification information of an object in accordance with embodiments of the present disclosure.
FIG. 10B is a flowchart illustrating an implementation of determining whether to terminate a sensing task based on identification information of an object in accordance with embodiments of the present disclosure.
FIG. 11A is a flowchart illustrating another implementation of determining whether to terminate a sensing task based on identification information of an object in accordance with the embodiments of the present disclosure.
FIG. 11B is a flowchart illustrating another implementation of determining whether to terminate a sensing task based on identification information of an object in accordance with the embodiments of the present disclosure.
FIG. 12 is a flowchart illustrating an implementation in which a tag informs a sensing function (SF) that sensing is prohibited in accordance with the embodiments of the present disclosure.
FIG. 13 is a flowchart illustrating another implementation in which a tag informs an SF that the sensing is prohibited in accordance with the embodiments of the present disclosure.
FIG. 14 is a schematic flowchart of a sensing authorization method 1400 in accordance with the embodiments of the present disclosure.
FIG. 15 is a schematic flowchart of a sensing authorization method 1500 in accordance with the embodiments of the present disclosure.
FIG. 16 is a schematic structural diagram of a first device 1600 in accordance with the embodiments of the present disclosure.
FIG. 17 is a schematic structural diagram of a first network element 1700 in accordance with the embodiments of the present disclosure.
FIG. 18 is a schematic structural diagram of a first network element 1800 in accordance with the embodiments of the present disclosure.
FIG. 19 is a schematic structural diagram of a sensing network element 1900 in accordance with the embodiments of the present disclosure.
FIG. 20 is a schematic structural diagram of a sensing network element 2000 in accordance with the embodiments of the present disclosure.
FIG. 21 is a schematic structural diagram of a terminal device 2100 in accordance with the embodiments of the present disclosure.
FIG. 22 is a schematic structural diagram of a communication device 2200 in accordance with the embodiments of the present disclosure.
FIG. 23 is a schematic structural diagram of a chip 2300 in accordance with the embodiments of the present disclosure.

### DETAILED DESCRIPTION

Technical solutions in embodiments of the present disclosure will be described hereafter with reference to drawings in the embodiments of the present disclosure.

It shall be noted that terms "first", "second" and the like in the specification of the embodiments of the present disclosure, the claims, and the drawings are used to distinguish similar objects, and are not necessarily used to describe a specific order or sequence. Objects described with "first" and "second" at the same time may be the same or different.

The technical solutions in the embodiments of the present disclosure may be applied to various communication systems, such as a global system of mobile communication (GSM), a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi) system, a 5th-generation (5G) communication system, and a beyond 5th-generation (B5G) mobile communication system or other communication systems.

Generally, a conventional communication system supports a limited number of connections, which is easy to implement. However, with the development of communication technologies, a mobile communication system will not only support traditional communication, but also support, for example, device to device (D2D) communication, machine to machine (M2M) communication, machine type communication (MTC), vehicle to vehicle (V2V) communication, vehicle to everything (V2X) communication, or the like. The embodiments of the present disclosure may also be applicable to these communication systems.

In an implementation, the communication system in the embodiments of the present disclosure may be applicable to a carrier aggregation (CA) scenario, a dual connectivity (DC) scenario, or a standalone (SA) networking scenario.

In an implementation, the communication system in the embodiments of the present disclosure may be applicable to an unlicensed spectrum, and the unlicensed spectrum may also be considered as a shared spectrum. Alternatively, the communication system in the embodiments of the present disclosure may also be applicable to licensed spectrum, and the licensed spectrum may also be considered as an unshared spectrum.

Various embodiments are described in the embodiments of the present disclosure in combination with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a radio communication device, a user agent, a user apparatus, or the like.

The terminal device may be a station (ST) in WLAN, a cellular phone, a cordless phone, a session initiation protocol (SIP) phone, a wireless local loop (WLL) station, a personal digital assistant (PDA) device, a handheld device with a wireless communication function, a computing device with a wireless communication function, another processing device connected to a wireless modem, a vehicle-mounted device, a wearable device, a terminal device in a next-generation communication system (e.g., NR network), a terminal device in a future evolved public land mobile network (PLMN) network, or the like.

In the embodiments of the present disclosure, the terminal device may be deployed on land, encompassing indoors or outdoors, in a handheld form, and in a wearable or vehicle-mounted form. Alternatively, the terminal device may also be deployed on water (e.g., a ship). Alternatively, the terminal device may also be deployed in air (e.g., on an airplane, a balloon, and a satellite).

In the embodiments of the present disclosure, the terminal device may be a mobile phone, a tablet computer (pad), a computer having a wireless transceiving function, a virtual reality (VR) terminal device, an augmented reality (AR) terminal device, a wireless terminal device in industrial control, a wireless terminal device in self-driving, a wireless terminal device in a remote medical, a wireless terminal device in a smart grid, a wireless terminal device in transportation safety, a wireless terminal device in a smart city, a wireless terminal device in a smart home, or the like.

As an example but not a limitation, in the embodiments of the present disclosure, the terminal device may be a wearable device. The wearable device, which may also be referred to as a wearable smart device, is a general term for wearable devices that are developed by performing an intelligent design on daily wear items (e.g., glasses, gloves, watches, clothing and shoes) using wearable technologies. The wearable device is a portable device that is worn directly on a body or integrated into clothes or an accessory of a user. The wearable device is not merely a hardware device, and implements powerful function through software support, data interaction and cloud interaction. Generalized wearable smart devices include devices (e.g., smart watches or smart glasses) with comprehensive functions, large sizes, and achievement of complete or some functions without relying on a smart phone, and devices (e.g., various smart bracelets or smart jewelries for monitoring physical signs) that only focus on a certain type of application function and need to be used in conjunction with other devices (e.g., smart phones).

In the embodiments of the present disclosure, the network device may be a device for communicating with a mobile device. The network device may be an access point (AP) in WLAN, a base station (base transceiver station, BTS) in GSM or CDMA, a base station (NodeB, NB) in WCDMA, or an evolutional base station (evolutional node B, eNB or eNodeB) in LTE, a relay station or an access point, a vehicle-mounted device, a wearable device, a network device (gNB) in an NR network, a network device in a future evolved PLMN network, a network device in an NTN network, or the like.

As an example but not a limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, or other places.

In the embodiments of the present disclosure, the network device may provide a service for a cell, and the terminal device communicates with the network device via a transmission resource (e.g., a frequency-domain resource or spectrum resource) used by the cell. The cell may be a cell corresponding to the network device (e.g., base station). The cell may belong to a macro base station, or belong to a base station corresponding to a small cell. The small cell here may include a metro cell, a micro cell, a pico cell, a femto cell, or the like. These small cells have characteristics of small coverage and low transmission power, and are suitable for providing a high-rate data transmission service.

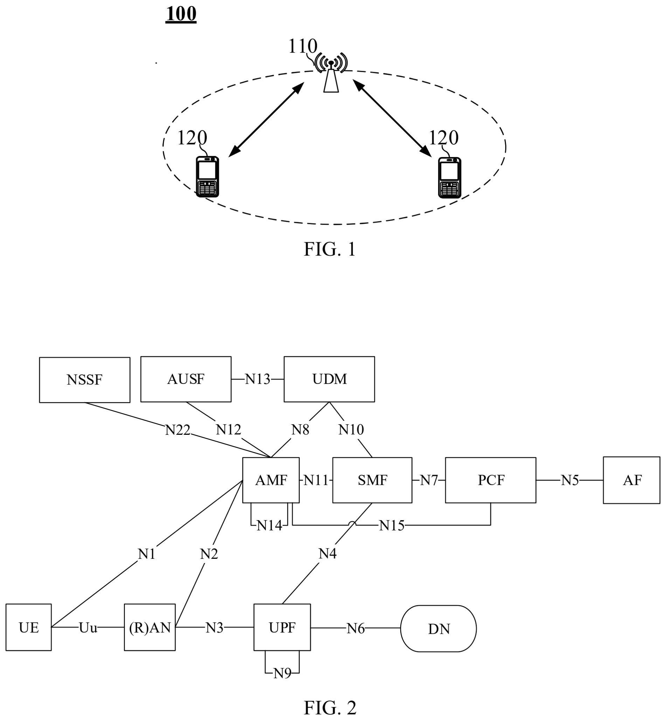

FIG. 1 exemplarily illustrates a communication system 100. The communication system includes a network device 110 and two terminal devices 120. In an implementation, the communication system 100 may include a plurality of network devices 110, and there may be other number of terminal devices within a coverage range of each network device 110, which is not limited in the embodiments of the present disclosure.

In an implementation, the communication system 100 may further include other network entities such as a mobility management entity (MME) and an access and mobility management function (AMF), which is not limited in the embodiments of the present disclosure.

The network device may include an access network device and a core network device. That is, the wireless communication system further includes a plurality of core networks for communicating with the access network device. The access network device may be an evolutional base station (evolutional node B, eNB or e-NodeB) macro base station, a micro base station (also referred to as a "small base station"), a pico base station, an access point (AP), a transmission point (TP) or a new generation Node B (gNodeB) in a long-term evolution (LTE) system, a next generation (NR) mobile communication system or a licensed assisted access long-term evolution (LAA-LTE) system.

It should be understood that a device having a communication function in a network/system in the embodiments of the present disclosure may be referred to as a communication device. Taking the communication system illustrated in FIG. 1 as an example, the communication device may include a network device with a communication function and terminal devices with communication functions, and the network device and the terminal devices may be specific devices in the embodiments of the present disclosure, and details are not repeated here. The communication device may further include other devices, such as a network controller, a mobility management entity and other network entities, in the communication system, which is not limited in the embodiments of the present disclosure.

FIG. 2 exemplarily illustrates an architecture diagram of a 5G network system. In FIG. 2, a UE, via a Uu interface, performs an access layer connection with an access network (AN), exchanges a message of the access layer and transmits wireless data; and the UE, via an N1 interface, performs a non-access layer (NAS) connection with an AMF and exchange an NAS message. The AMF is a mobility management function in a core network, and an SMF is a session management function in the core network. In addition to performing mobility management on the UE, the AMF is also responsible for forwarding a session management-related message between the UE and the SMF. A PCF is a policy control function in the core network, and is responsible for formulating policies related to mobility management, session management, charging, and the like for the UE. A UPF is a user plane function in the core network, and performs data transmission with an external data network via an N6 interface and performs data transmission with the AN via an N3 interface.

It shall be understood that terms "system" and "network" herein are often used interchangeably herein. The term "and/or" herein is only an association relationship to describe associated objects, and indicates that there may be three kinds of relationships. For example, A and/or B may indicate three cases where: A exists alone, both A and B exist, and B exists alone. Moreover, a character "/" herein generally indicates that associated objects before and after the character "/" are in an "or" relationship.

It shall be understood that the term "indicate/indicating/indicated" in the embodiments of the present disclosure may be a direct indication, an indirect indication, or an association relationship. For example, A indicating B may mean that A directly indicates B, for example, B may be obtained through A. Alternatively, A indicating B may mean that A indirectly indicates B, for example, A indicates C, and B may be obtained through C. Alternatively, A indicating B may mean that there is an association relationship between A and B.

In the description of the embodiments of the present disclosure, the term "correspond/corresponding/correspondence" may indicate a direct correspondence or indirect correspondence between two elements, or an association relationship between two elements, or a relationship of indicating and being indicated, configuring and being configured, or the like.

In order to facilitate understanding of the technical solutions in the embodiments of the present disclosure, related technologies of the embodiments of the present disclosure will be described hereafter. The related technologies below, as optional solutions, may be arbitrarily combined with the technical solutions in the embodiments of the present disclosure, and these combined solutions shall all belong to a protection scope of the embodiments of the present disclosure.

The wireless electromagnetic wave signal employed in the cellular network may not only be used for purposes of wireless data transmission and communication, but also have an environmental sensing capability, such as recognition for user movement or gesture, breathing monitoring, measurement on terminal moving speed, environmental imaging, and weather monitoring. Therefore, the cellular network may be considered not only for communication and data transmission, but also for acquisition of sensing information.

For example, the B5G network may support the sensing capability, and the sensing function can be supported in a 3rd generation partnership project (3GPP) network by adding a sensing control network element (sensing function) and a corresponding procedure. When an application transmits a sensing request for a target UE to a core network of the 3GPP network, the core network selects a correct access network device or an auxiliary UE through the sensing control network element or an AMF, triggers a capability to perform a sensing-related wireless measurement, initiates measurement on sensing information and generates a sensing result.

Main wireless sensing scenarios of integrated sensing and communication (referred to as comm-sensing integration for short) are as follows:
1) base station echo sensing link (single gNB sensing): a base station transmits a sensing signal and receives an echo signal;
2) inter-base station sensing link (gNB-gNB sensing): a base station B receives a sensing signal transmitted by a base station A;
3) new radio interface uplink sensing link (UE-gNB uplink sensing): a base station receives a sensing signal transmitted by a terminal;
4) new radio interface downlink sensing link (UE-gNB downlink sensing): a terminal receives a sensing signal transmitted by a base station;
5) terminal echo sensing link (single UE sensing): a terminal transmits a sensing signal and receives an echo signal; and
6) inter-terminal sensing link (UE-UE sensing): a terminal B receives a sensing signal transmit by a terminal A.

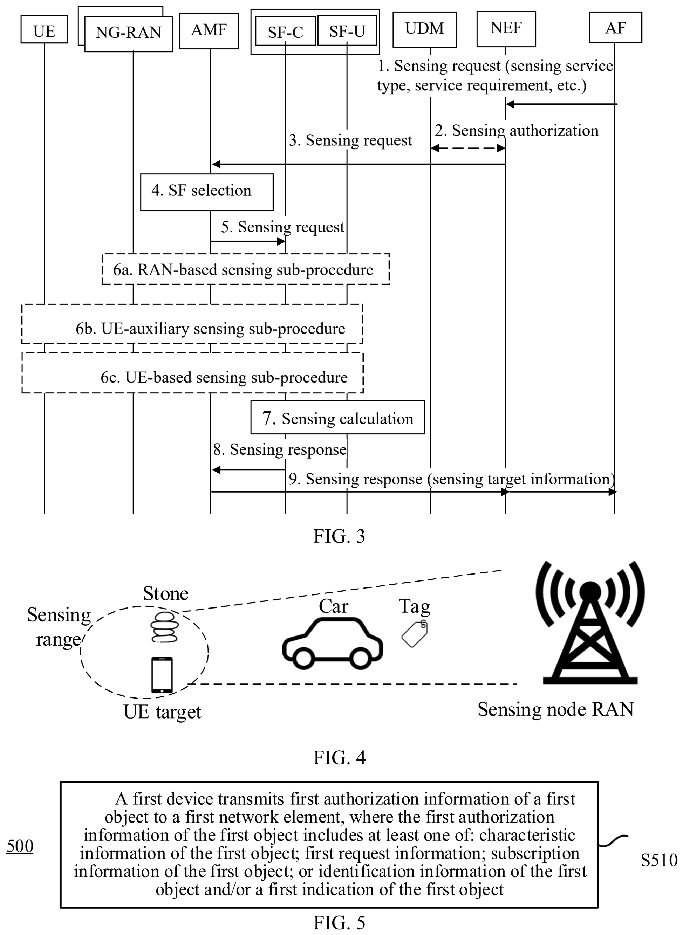

FIG. 3 is a schematic diagram of a sensing procedure triggered by an application function (AF). In the procedure, the AF transmits a sensing request to an access and mobility management function (AMF) through a network exposure function (NEF), and then the AMF transmits the sensing request to a sensing function (SF) network element, thereby realizing a function of the SF controlling the base station or the UE to perform sensing measurement based on the sensing request, and a function of performing a calculation based on sensing measurement data reported by the base station or the UE and espousing a sensing result to the AF.

The NEF performs authorization verification on a service sensing request of the AF, authorization information may be stored locally in the NEF or in a unified data management (UDM) function, and the NEF may request authorization verification from the UDM. The NEF obtains privacy verification information from the UDM and performs privacy verification. For example, if the UE does not permit a certain type of service to obtain sensing measurement data or a sensing result related to the service, the NEF rejects the sensing request. The NEF routes the sensing request based on a parameter of the sensing request. From a perspective of a UE user, the sensing measurement data or the sensing result includes environmental information surrounding the UE, which is a type of relatively private data. Learning from a positioning privacy verification idea in a location service (LCS), if an application expects to obtain sensing measurement data or a sensing result surrounding the UE, the network needs to first confirm whether the user of the UE permits the application to obtain the above data.

Sensing targets may be classified into UE targets and non-UE targets. In the existing scheme, an authorization authentication for a sensing task is performed only on the target UE, and the authorization authentication for an object of a sensing target being not the UE or for an object of a non-sensing target within a sensing range has not been discussed. FIG. 4 is a schematic diagram illustrating a sensing scenario. As illustrated in FIG. 4, there are problems of how to obtain authorization of a vehicle owner in a case where the sensing target is a certain vehicle; or how to obtain authorization of an owner of the object B in a case where sensing data of an object B nearby is obtained in a process of sensing an object A; or how to avoid collecting sensing data of a possession of a unauthorized user (e.g., a stone in FIG. 4) in a case of performing area-oriented sensing. These problems are hardly addressed in current technical discussion.

As illustrated in FIG. 4, in a case where the sensing target is a non-UE object or a non-target object is also within the sensing range, since the above objects are not UEs in 3GPP and cannot establish connection with a sensing node (e.g., a radio access network (RAN) in FIG. 4), and the non-UE object is unknown to the sensing node. However, the above objects are definitely affected by a sensing signal in the process of sensing, and there is a great hidden risk of privacy leakage. As illustrated in FIG. 4, when the sensing node senses the target UE, sensing data of a car between the sensing node RAN and the target UE, and sensing data of a person or an object near the target UE may also be collected into the sensing data. For example, in a case where the RAN node performs millimeter wave imaging, in addition to the target UE, image information of a non-target car, stone and other objects will also be present in a 3D image modeling of the sensing result, thus leaking privacy of these objects without their awareness. In addition, when a third-party application requests to sense the car in FIG. 4, if the car is not a 3GPP UE, the sensing control network element fail to obtain an authorization of the car by establishing a connection with the car through the sensing node. In this case, sensing data of the car may be leaked to the third-party application without awareness of the car owner.

Embodiments of the present disclosure provide a sensing authorization method. FIG. 5 is a schematic flowchart of a sensing authorization method 500 according to the embodiments of the present disclosure, and the method may be applied to but is not limited to any one of systems shown in FIG. 1 to FIG. 4. The method includes at least some of following contents.

In S510, a first device transmits first authorization information of a first object to a first network element, where the first authorization information of the first object includes at least one of:
characteristic information of the first object;
first request information;
subscription information of the first object; or
identification information of the first object and/or a first indication of the first object.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the first request information may be used to request the first network element to determine sensing measurement data of the first object. The sensing measurement data of the first object obtained and stored by the first network element may be used for the sensing network element to compare a sensing result with the sensing measurement data of the first object after performing a subsequent sensing task, and to finally screen out sensing measurement data that does not include the sensing measurement data of the first object (e.g., an object that is prohibited from being sensed).

In some embodiments, the subscription information of the first object may include identification information of the first object and/or a second indication of the first object, and the second indication is used to indicate that the first object is permitted to be sensed or prohibited from being sensed. The subscription information of the first object may be stored in a network element such as a UDM or a UMR.

In some embodiments, the first indication may be used to indicate that the first object is permitted to be sensed or prohibited from being sensed. The identification information of the first object and the indication information may be registered into a network element such as an SF or an NEF.

The identification information of the first object may include a device identifier such as a UE ID, an Internet of Things (IoT) ID, a Tag ID or a personal IoT network element (PINE) ID.

The first network element may receive and store first authorization information of each first object (e.g., tag information of the first object; or the identification information of the first object and corresponding indication information), including first authorization information of a first object permitted to be sensed and first authorization information of a first object prohibited from being sensed. Alternatively, the first network element may receive and store the first authorization information (e.g., the tag information of the first object; or the identification information of the first object and the corresponding indication information) of the first object prohibited from being sensed, and the subscription information of the first object or the indication information indicates that the first object is prohibited from being sensed; and for a first object that does not store relevant subscription information or indication information, the first network element defaults that the first object is permitted to be sensed. Alternatively, the first network element may receive and store the first authorization information (e.g., the tag information of the first object; or the identification information of the first object and the corresponding indication information) of the first object permitted to be sensed, and the subscription information of the first object or the indication information indicates that the first object is permitted to be sensed; and for a first object that does not store the relevant subscription information or the indication information, the first network element defaults that the first object is prohibited from being sensed.

The identification information of the first object may include a device identifier. For example, the device identifier may include a UE ID, an Internet of Things (IoT) device ID, a Tag ID, or a personal IoT network element (PINE) ID.

In some embodiments, the first device may include a UE or an application function (AF).

In some embodiments, the first network element may include a core network element, such as an SF, a UDM, or a unified data repository (UDR). The first network element may store the first authorization information of the first object; and/or obtain and store sensing measurement data of the first object according to the first authorization information of the first object. The first network element may perform an authorization management on whether the first object is permitted to be sensed according to these stored information.

The sensing authorization method provided in the embodiments of the present disclosure includes three categories of methods, including authorization verification before sensing, data screening after sensing, and detection of prohibited information during sensing. Details are as follows.
1. Before performing a sensing task, the sensing network element queries a "blacklist" of objects that are prohibited to be detected, and determines whether to perform a received sensing task request through comparing characteristic information thereof.
2. After completing collection for sensing measurement data, the sensing network element deletes data of an object that is prohibited from being sensed from a sensing result. For example, a network data analytics function (NWDAF) network element is used to delete sensing measurement data of the object according to the characteristic information of the object. Alternatively, the user may request the sensing network element to pre-collect the sensing measurement data of the object that is prohibited from being sensed, and the sensing network element may compare the sensing result with the pre-collected sensing measurement data after performing a subsequent sensing task, and then screen out sensing measurement data that does not include the sensing measurement data of the object prohibited from being sensed. In addition, the sensing network element may further generate a sensing result by using remaining sensing measurement data after the screening.
3. The sensing network element detects termination information in a process of performing the sensing task.
   (1) The user may add a prohibiting sensing tag to a possession thereof (the tag may be regarded as an IoT device or a UE), and register identification information of the tag into the core network element. The tag feedbacks the identification information to a relevant network node after receiving a sensing signal, and the sensing node terminates the sensing task after recognizing the identification information.
   (2) The user may attach a tag with a basic communication function to a device belonging to the user, and the device may feedback whether it is willing to be sensed after receiving the sensing signal.

Specific embodiments will be described in detail with reference to the drawings hereafter.

### Embodiment 1

In the present embodiment, the user registers first authorization information of possessions that are not expected to be sensed into the core network element, and in response to receiving a sensing request, the core network element may compare the sensing request with characteristic information of the possessions that are prohibited from being sensed in a subscription message of the user to determine whether to authorize the sensing request.

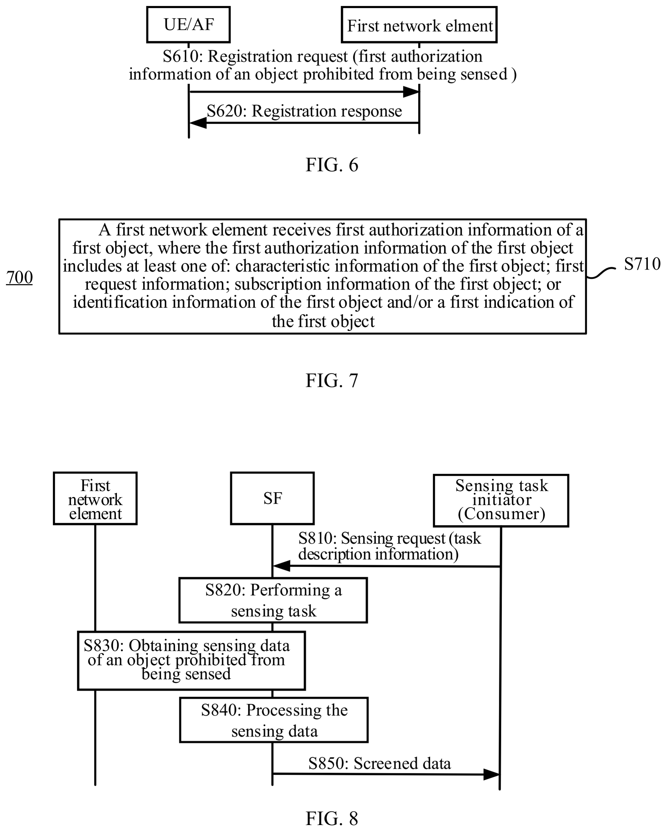

FIG. 6 is a flowchart of a registration procedure of object-related information according to the embodiments of the present disclosure. As illustrated in FIG. 6, the user may, via the AF or the UE, register sensed first authorization information of an object belonging to the user into the first network element, where the first network element may be a core network element such as an SF, a UDM or a UDR. The first authorization information may include subscription information, where the subscription message is used to indicate that the object is permitted to be sensed or prohibited from being sensed, and the subscription message may be stored in the core network element such as the UDM or the UDR. Alternatively, according to the first request information transmitted by the user via the AF or the UE, the first network element (e.g., the SF) may sense an object indicated by the user, and store sensing measurement data of the object, where the sensing measurement data of the object may be stored in a core network element such as the SF, the UDR, or the UDM. As illustrated in FIG. 6, a specific process includes following steps.

In S610, a UE/AF registers first authorization information of an object prohibited from being sensed (e.g., a first object) into a first network element, where the first authorization information of the first object may include at least one of:
a. characteristic information of the first object, for example, a shape, a size, a material, a temperature, a speed, an orientation of the object and information such as a position where the object is permitted to be sensed, a position where the object is prohibited from being sensed, a time at which the object is permitted to be sensed, and a time at which the object is prohibited from being sensed.
b. first request information, where the first request information requests an SF to obtain sensing measurement data of the first object by scanning in advance, and to store the sensing measurement data of the first object in the SF or another core network element; and after completing a sensing task, the SF may compared the obtained sensing measurement data with pre-stored sensing measurement data of the object that is prohibited from being sensed, and thus the pre-stored data prohibited from being sensed may be deleted from the obtained sensing measurement data.
c. subscription information of the first object, where the subscription information may include identification information of the first object and/or a second indication, the second indication may be used to indicate that the first object is permitted to be sensed or prohibited from being sensed, the identification information of the first object may include a device identifier such as a UE ID, an IoT ID, a Tag ID, or a PINE ID, and the subscription information of the first object may be stored in a network element such as a UDM or a UMR.
d. identification information of the first object and a first indication, where the first indication may be used to indicate that the first object is permitted to be sensed or prohibited from being sensed, the identification information of the first object may include a device identifier such as a UE ID, an IoT ID, a Tag ID, or a PINE ID, and the identification information of the first object and the indication information may be registered into a network element such as an SF or an NEF.

In S620, the first network element feedbacks to the UE/AF that the first authorization information of the object that is prohibited from being sensed has been successfully registered.

The above example is described by taking the registration for the first authorization information of the object that is prohibited by the user from being sensed as an example. In other embodiments of the present disclosure, the user may, via the UE/AF, register first authorization information of an object that is permitted to be sensed. Alternatively, the user may, via the UE/AF, register both the first authorization information of the object that is permitted to be sensed and the first authorization information of the object that is prohibited from being sensed. In each of the cases, the first authorization information has the consistent content with that described in step S610, and details are not repeated here.

After the first network element receives and stores first authorization information of each first object, the sensing network element may apply for authorization from the first network element before performing a sensing task, where the process of applying for the authorization is not much different from the existing process, except that information of an object queried for the authorization is different from that of the existing process. For example, the NEF performs authorization verification on a sensing request of the AF, the first authorization information may be stored locally in the UDM, and the NEF may request the authorization verification from the UDM. The NEF obtains subscription information or indication information of the first object (the first object may be a sensing target for the sensing request or an object within a sensing range of the sensing request) from the UDM, and performs the authorization verification. For example, if the UE does not allow a certain type of service to obtain sensing measurement data or a sensing result related to the first object, the NEF rejects the sensing request.

The embodiments of the present disclosure further provide a sensing authorization method, and the sensing authorization method may be applied to a first network element, for example, a core network element such as an SF, a UDM or a UDR. FIG. 7 is a schematic flowchart of a sensing authorization method 700 according to embodiments of the present disclosure, and the method may be applied to but is not limited to system illustrated in any one of FIGS. 1 to 4. The method includes at least some of following contents.

In S710: a first network element receives first authorization information of a first object, where the first authorization information of the first object includes at least one of:
characteristic information of the first object;
first request information;
subscription information of the first object; or
identification information of the first object and/or a first indication of the first object.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the first request information is used to request the first network element to determine sensing measurement data of the first object. The first network element performs sensing in advance according to the first request information, and obtains and stores sensing measurement data of the first object (e.g., an object prohibited from being sensed), where the sensing measurement data may be used for the sensing network element to delete, from collected sensing measurement data, sensing measurement data of the object that is prohibited from being sensed after completing collection for the sensing measurement data. The sensing network element may further generate a sensing result using remaining sensing measurement data.

In some embodiments, the subscription information of the first object includes identification information of the first object and/or a second indication of the first object, and the second indication is used to indicate that the first object is permitted to be sensed or prohibited from being sensed.

In some embodiments, the first indication is used to indicate that the first object is permitted to be sensed or prohibited from being sensed.

In some embodiments, the identification information of the first object includes a device identifier such as a UE ID, an Internet of Things device ID, a tag ID, or a PINE ID.

Furthermore, in some embodiments, if the first network element is not a sensing network element (e.g., an SF), after the sensing network element (e.g., the SF) performs a sensing task according to a sensing task request, the first network element may transmit characteristic information and/or sensing measurement data of the first object that match the sensing task description information in the sensing task request to the sensing network element (e.g., the SF), so that the sensing network element (e.g., the SF) deletes a part overlapping with the sensing measurement data of the first object from sensing measurement data obtained after performing the sensing task, and transmits sensing measurement data remained after deletion to a sensing task initiator (consumer); or the sensing network element generates a sensing result by using remaining sensing measurement data after the deletion, and transmits the sensing result to the sensing task initiator (consumer). Alternatively, if the first network element is a sensing network element (e.g., the SF), after receiving the sensing request including the sensing task description information and performing the sensing task according to the sensing task request, the first network element may search for pre-stored characteristic information and/or sensing measurement data of the first object that match the sensing task description information, delete a part overlapping with the sensing measurement data of the first object from sensing measurement data obtained after performing the sensing task, and transmit sensing measurement data remained after deletion to a sensing task initiator (consumer); or the first network element generates a sensing result by using remaining sensing measurement data after the deletion, and transmits the sensing result to the sensing task initiator (consumer).

The sensing task description information may include at least one of sensing target area information or sensing time information.

The above example is used for deleting a part overlapping with the sensing measurement data of the first object from the sensing measurement data obtained after performing the sensing task after the sensing network element performs the sensing task. In some other embodiments, after receiving identification information (the identification information may be transmitted by a sensed object or by a terminal device associated with the sensed object) of the sensed object (e.g., the first object), the first network element may search for subscription information or indication information of the first object according to the identification information of the first object, and transmit the subscription information or the indication information of the first object to the sensing network element (e.g., the SF). The sensing network element (e.g., the SF) determines whether the first object is permitted to be sensed according to the subscription information or the indication information of the first object, and terminates the sensing task in a case where the first object is not permitted to be sensed; alternatively, the first network element searches for the subscription information or the indication information of the first object according to the identification information of the first object, and transmits a sensing prohibition indication or a sensing permission indication to the sensing network element (e.g., the SF) according to the subscription information or the indication information, and the sensing network element may terminate the sensing task in response to receiving the sensing prohibition indication.

Specifically, the first network element receives the identification information of the first object from the sensing network element; and the first network element transmits second authorization information of the first object to the sensing network element.

In some embodiments, the first network element transmitting the second authorization information of the first object to the sensing network element includes:
searching for the subscription information or the first indication of the first object according to the identification information of the first object, and transmitting the second authorization information of the first object to the sensing network element according to the subscription information or the first instruction of the first object, where the second authorization information of the first object includes a sensing prohibition indication or a sensing permission indication of the first object.

Alternatively, the first network element transmitting the second authorization information of the first object to the sensing network element includes:
the first network element searching for the subscription information or the first indication of the first object according to the identification information of the first object, and transmitting the second authorization information of the first object to the sensing network element, where the second authorization information of the first object includes the subscription information or the first indication of the first object.

Specific embodiments will be described in detail with reference to the drawings hereafter.

### Embodiment 2

In the present embodiment, after collecting target sensing measurement data, the sensing network element (e.g., the SF) deletes sensing measurement data of an object that is prohibited from being sensed from sensing measurement data. FIG. 8 is a flowchart of an implementation of deleting data of the object prohibited from being sensed after the sensing measurement data is obtained according to the embodiments of the present disclosure. As illustrated in FIG. 8, in a case where the user has stored the sensing measurement data of the object prohibited from being sensed in the first network element, the SF may obtain the sensing measurement data of the object prohibited from being sensed from the first network element or locally after collecting the sensing measurement data, delete the data of the object prohibited from being sensed from the collected sensing measurement data, and then transmit the screened data to the sensing task initiator (consumer). Alternatively, the SF generates a sensing result by using the remaining sensing measurement data after the screening, and transmits the sensing result to the sensing task initiator. The consumer may be an AF, a UE, or other core network elements. The specific process is as follows.

In S810, a consumer transmits a sensing request to an SF, where the sensing request includes sensing task description information, such as a sensing task type, a sensing requirement and a sensing mode. For example, the sensing requirement may include at least one of sensing target area information or sensing time information.

In S820, the SF performs a sensing task according to the sensing request.

In S830, the SF obtains sensing measurement data of the object that is prohibited from being sensed from the local (in a case where a first network element is the SF) or the first network element (in a case where the first network element is not the SF). For example, the SF may find out matched sensing measurement data of an object prohibited from being sensed according to the sensing task description information, such as the sensing target area information, the sensing time information and other service requirements.

In S840, the SF deletes a part overlapping with the sensing measurement data of the object prohibited from being sensed obtained in step S830 from the sensing measurement data obtained after performing the sensing task in step S820, so as to screen out the sensing measurement data obtained by performing the sensing task.

In S850, the SF transmits the screened sensing measurement data to the consumer; alternatively, the SF calculates a sensing result using the screened sensing measurement data and transmits the sensing result to the consumer.

In this way, the sensing measurement data or the sensing result transmitted by the SF to the consumer does not contain information of the object prohibited from being sensed, thereby providing a degree of privacy protection.

### Embodiment 3

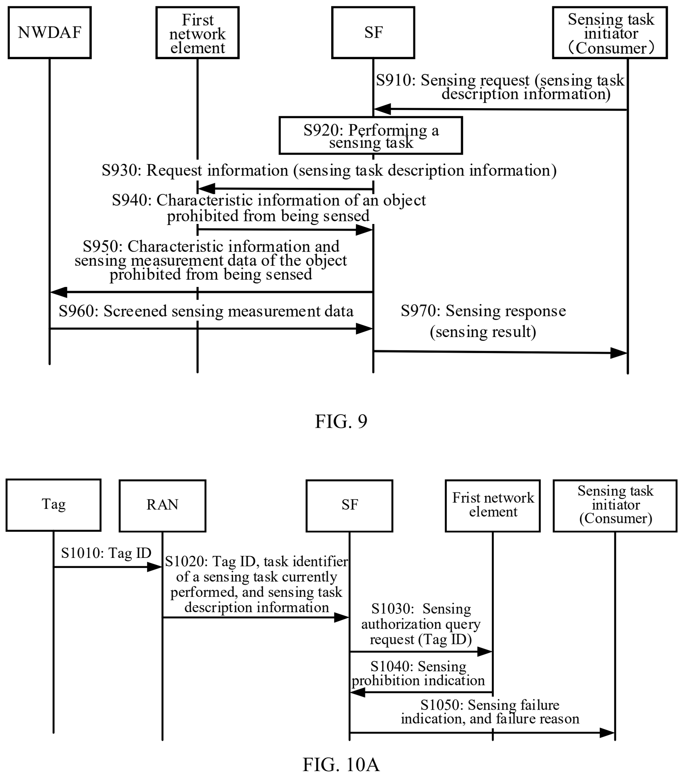

In the present embodiment, after collecting the target sensing measurement data, the sensing network element (e.g., the SF) deletes the sensing measurement data of the object prohibited from being sensed from the sensing measurement data by means of other network elements (e.g., a NWDAF). FIG. 9 is a flowchart illustrating another implementation of deleting data of the object prohibited from being sensed after the sensing measurement data is obtained according to the embodiments of the present disclosure. As illustrated in FIG. 9, in a case where the first network element stores the characteristic information of the object prohibited from being sensed instead of the sensing measurement data of the object prohibited from being sensed, the SF may delete the data of the object prohibited from being sensed from data collected in the sensing task by means of the NWDAF. The specific process is as follows.

In S910, a consumer transmits a sensing request to an SF, where the sensing request includes sensing task description information, such as a sensing task type, a sensing requirement and a sensing mode. For example, the sensing requirement may include at least one of sensing target area information or sensing time information.

In S920, the SF performs a sensing task according to the sensing request.

In S930, the SF requests a first network element (in a case where the first network element is not the SF) to obtain related data (e.g., characteristic information) of an object prohibited from being sensed, where the request information may include the sensing task description information, such as a sensing target area, a sensing time and other sensing service requirements.

In S940, the first network element may return characteristic information of the object prohibited from being sensed that is located within the sensing target area and the sensing time to the SF.

The above steps S930 and S940 are applied to a case where the first network element is not the SF. In the case where the first network element is not the SF, the SF may search for the characteristic information of the object prohibited from being sensed that is located within the sensing target area and the sensing time from the first authorization information stored in advance.

In S950, the SF transmits the sensing measurement data and the characteristic information of the object prohibited from being sensed that are obtained after performing the sensing task to the NWDAF.

In S960, by means of artificial intelligence (AI) technology, the NWDAF identifies sensing measurement data (that is, data of the object prohibited from being sensed) corresponding to the characteristic information of the object prohibited from being sensed from the sensing measurement data collected in the sensing task and deletes these data, so as to perform screening on the sensing measurement data collected in the sensing task and transmit screened sensing measurement data back to SF.

In S970, the SF transmits the screened sensing measurement data to the consumer; alternatively, the SF calculates a sensing result using the screened sensing measurement data and transmits the sensing result to the consumer.

In this way, the sensing measurement data or the sensing result transmitted by the SF to the consumer does not contain information of the object prohibited from being sensed, thereby providing a degree of privacy protection.

### Embodiment 4

In the present embodiment, the user may add a prohibiting sensing tag to a possession thereof (the tag may be regarded as an IoT device or a UE), and register the identification information of the possession into the core network element. After receiving the sensing signal, the tag feeds back the identification information of the possession to the RAN and transmits the identification information of the possession to the sensing network element via the RAN. Alternatively, if the possession is a terminal device (e.g., an IoT device or a UE), the possession may transmit the identification information thereof to the RAN and transmit the identification information to the sensing network element via the RAN. The RAN in the embodiments of the present disclosure may refer to an access network device, and may be an access network device or a station such as a RAN, an access point (AP), a gNB (gNodeB), or an eNB (eNodeB). The RAN in the subsequent embodiments is the same as the RAN referred to herein, which will not be repeated hereafter. The sensing network element may initiate an authorization verification request to the first network element by using the identification information of the possession, and terminate an ongoing sensing task responsive to failure of the authorization verification.

FIG. 10A is a flowchart illustrating an implementation of determining whether to terminate a sensing task based on identification information of the object according to embodiments of the present disclosure. As illustrated in FIG. 10A, a tag on an object that is prohibited from being sensed will be activated in response to receiving energy of a sensing signal, and the tag transmits its Tag ID (which may also be regarded as identification information of a sensed object) to the SF via a RAN. The SF may query the identification information from the first network element, and terminate the sensing task based on a query result. The specific process is as follows.

In S1010, a tag on an object transmits a Tag ID to a RAN after receiving a sensing signal.

In S1020, the RAN forwards the Tag ID, a task identifier (Task ID) of a sensing task currently performed, and sensing task description information to an SF. The sensing task description information may include at least one of sensing target area information or sensing time information.

In S1030, the SF transmits a sensing authorization query request to a first network element, where the sensing authorization query request includes the Tag ID.

In S1040, the first network element searches for first authorization information stored in advance based on the Tag ID to obtain subscription information of an object indicated by the Tag ID; and if the subscription information indicates that sensing is prohibited, the first network element transmits a sensing prohibition indication to the SF.

In S1050, the SF terminates the sensing task based on the received sensing prohibition indication, and informs the consumer of a sensing failure indication and a failure reason.

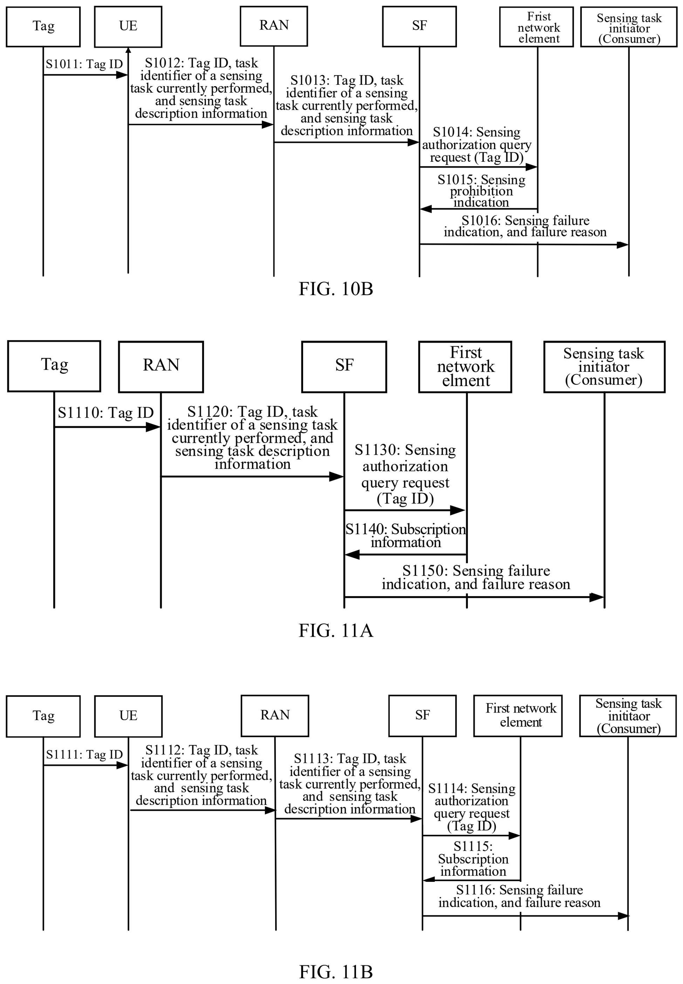

FIG. 10B is a flowchart illustrating an implementation of determining whether to terminate the sensing task based on the identification information of the object according to the embodiments of the present disclosure. As illustrated in FIG. 10B, a tag on the object that is prohibited from being sensed will be activated in response to receiving the energy of the sensing signal, the tag transmits its Tag ID (which may also be regarded as identification information of the sensed object) to the UE participating in the sensing task, and the UE participating in the sensing task transmits the Tag ID to the SF via the RAN. The SF may query the identification information from the first network element, and terminate the sensing task based on the query result. The specific process is as follows.

In S1011, a tag on an object transmits a Tag ID to an UE participating in a sensing task after receiving a sensing signal.

In S1012, the UE participating in the sensing task forwards the Tag ID, a task identifier (Task ID) of the sensing task currently performed, and sensing task description information to a RAN. The sensing task description information may include at least one of sensing target area information or sensing time information.

In S1013, the RAN forwards the Tag ID, the task identifier (Task ID) of the sensing task currently performed, and the sensing task description information to the SF. The sensing task description information may include at least one of the sensing target area information or the sensing time information.

In S1014, the SF transmits a sensing authorization query request to a first network element, where the sensing authorization query request includes the Tag ID.

In S1015, the first network element searches for first authorization information stored in advance based on the Tag ID to obtain subscription information of an object indicated by the Tag ID; and if the subscription information indicates that sensing is prohibited, the first network element transmits a sensing prohibition indication to the SF.

In S1016, the SF terminates the sensing task based on the received sensing prohibition indication, and informs the consumer of a sensing failure indication and a failure reason.

The above example is described by taking an example in which the tag on the sensed object transmits the identification information. If the sensed object is a terminal device (e.g., an IoT device or a UE), the identification information may also be transmitted by the sensed object in the present embodiments.

In this way, during a sensing process, the object prohibited from being sensed may trigger a termination process for the sensing process after receiving the sensing signal, thereby providing a certain degree of privacy protection.

### Embodiment 5

In the present embodiment, the user may add a prohibiting sensing tag to a possession thereof (the tag may be regarded as an IoT device or a UE), and register the identification information of the possession into the core network element. After receiving the sensing signal, the tag feeds back the identification information of the possession to the RAN and transmits the identification information of the possession to the sensing network element via the RAN. Alternatively, if the possession is a terminal device (e.g., an IoT device or a UE), the possession may transmit the identification information thereof to the RAN and transmit the identification information to the sensing network element via the RAN. The sensing network element may initiate an authorization verification request to the first network element by using the identification information of the possession, determine whether the possession is permitted to be sensed according to the subscription information of the possession fed back by the first network element, and terminate an ongoing sensing task in response to determining that sensing is not permitted. Different from the Embodiment 4, in the present embodiment, the sensing network element determines whether the object is permitted to be sensed based on the tag information of the object, while in the Embodiment 4, the first network element determines whether the object is permitted to be sensed.

FIG. 11A is a flowchart illustrating another implementation of determining whether to terminate the sensing task based on the identification information of the object according to the embodiments of the present disclosure. As illustrated in FIG. 11A, a tag on the object that is prohibited from being sensed will be activated in response to receiving energy of a sensing signal, and the tag transmits its Tag ID (which may also be regarded as identification information of the sensed object) to the SF via the RAN. The SF may query subscription information corresponding to the identification information from the first network element, and determine whether to terminate the sensing task based on the subscription information. The specific process is as follows.

In S1110, a tag on an object transmits a Tag ID to a RAN after receiving a sensing signal.

In S1120: the RAN forwards the Tag ID, a task identifier (Task ID) of a sensing task currently performed, and sensing task description information to an SF. The sensing task description information may include at least one of sensing target area information or sensing time information.

In S1130: the SF transmits a sensing authorization query request to a first network element, where the sensing authorization query request includes the Tag ID.

In S1140: the first network element searches for first authorization information stored in advance based on the Tag ID to obtain subscription information of an object indicated by the Tag ID, and returns the subscription information to the SF. The subscription information is used to identify that an object indicated by the Tag ID is prohibited from being sensed or permitted to be sensed.

In S1150: the SF determines whether the object indicated by the Tag ID is prohibited from being sensed based on the subscription information, and if the object is prohibited from being sensed, terminates the sensing task and informs the consumer of a sensing failure indication and a failure reason.

FIG. 11B is a flowchart illustrating another implementation of determining whether to terminate the sensing task based on the identification information of the object according to the embodiments of the present disclosure. As illustrated in FIG. 11B, a tag on the object that is prohibited from being sensed will be activated in response to receiving the energy of the sensing signal, the tag transmits its Tag ID (which may also be regarded as identification information of the sensed object) to the UE participating in the sensing task, and the UE participating in the sensing task transmits the Tag ID to the SF via the RAN. The SF may query subscription information corresponding to the identification information from the first network element, and determine whether to terminate the sensing task based on the subscription information. The specific process is as follows.

In S1111: a tag on an object transmits a Tag ID to an UE participating in a sensing task after receiving a sensing signal.

In S1112: the UE participating in the sensing task forwards the Tag ID, a task identifier (Task ID) of the sensing task currently performed, and sensing task description information to a RAN. The sensing task description information may include at least one of sensing target area information or sensing time information.

In S1113: the RAN forwards the Tag ID, the task identifier (Task ID) of the sensing task currently performed, and the sensing task description information to the SF. The sensing task description information may include at least one of the sensing target area information or the sensing time information.

In S1114: the SF transmits a sensing authorization query request to a first network element, where the sensing authorization query request includes the Tag ID.

In S1115: the first network element searches for first authorization information stored in advance based on the Tag ID to obtain subscription information of an object indicated by the Tag ID, and returns the subscription information to the SF. The subscription information is used to identify that the object indicated by the Tag ID is prohibited from being sensed or permitted to be sensed.

In S1116: the SF determines whether the object indicated by the Tag ID is prohibited from being sensed based on the subscription information, and if the object is prohibited from being sensed, terminates the sensing task and informs the consumer of a sensing failure indication and a failure reason.

The above example is described by taking an example in which the tag on the sensed object transmits the identification information. If the sensed object is a terminal device (e.g., an IoT device or a UE), the identification information may also be transmitted by the sensed object in the present embodiments.

In this way, during a sensing process, the object prohibited from being sensed may trigger a termination process for the sensing process after receiving the sensing signal, thereby providing a certain degree of privacy protection.

### Embodiment 6

In the present embodiment, a possession of the user may be a terminal device (e.g., a UE or an IoT device), or the user may add a tag (the tag may be regarded to be a terminal device associated with the possession, such as a UE or an IoT device) to the possession. During the sensing process, after receiving the sensing signal, the object or the tag may transmit a message to inform the RAN whether it agrees to be sensed or inform the RAN of its identification information. For example, after receiving the sensing signal, the terminal device or the tag transmits a sensing prohibition indication and/or identification information of the terminal device.

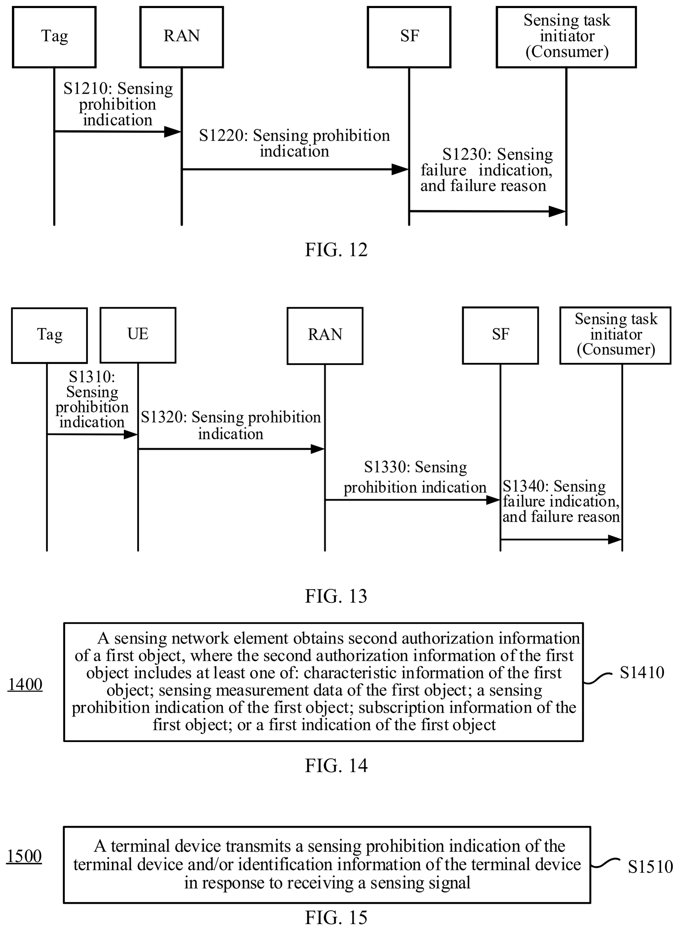

FIG. 12 is a flowchart illustrating an implementation in which a tag informs the SF that sensing is prohibited according to the embodiments of the present disclosure. As illustrated in FIG. 12, a tag device on the object that is prohibited from being sensed is activated in response to receiving the energy of the sensing signal, and the tag device may inform the SF that the tag device prohibits being sensed via the RAN, thereby terminating the sensing task. The specific process is as follows.

In S1210, a tag on an object transmits a sensing prohibition indication to a RAN after receiving a sensing signal.

In S1220, the RAN forwards the sensing prohibition indication, a task identifier (Task ID) of a sensing task currently performed, and sensing task description information to an SF.

In S1230, the SF terminates the sensing task, and informs the consumer of a sensing failure indication and a failure reason.

FIG. 12 is described by taking an example in which the tag on the object transmits the sensing prohibition indication, but the sensing prohibition indication may also be transmitted by the object in the present embodiment.

In this way, during a sensing process, the object prohibited from being sensed or the tag on the object may trigger a termination process for the sensing process after receiving the sensing signal, thereby providing a certain degree of privacy protection.

### Embodiment 7

In the present embodiment, a possession of the user may be a terminal device (e.g., a UE or an IoT device), or the user may add a tag (the tag may be regarded to be a terminal device associated with the possession, such as a UE or an IoT device) to the possession. During the sensing process, after receiving the sensing signal, the object or the tag may transmit a message to inform the RAN whether it agrees to be sensed or inform the RAN of its identification information. For example, after receiving the sensing signal, the object or the tag transmits a sensing prohibition indication and/or identification information of the terminal device. The message may be forwarded to the RAN via the UE participating in the sensing task.

FIG. 13 is a flowchart illustrating another implementation in which the tag informs the SF that the sensing is prohibited according to the embodiments of the present disclosure. As illustrated in FIG. 13, a tag device on the object that is prohibited from being sensed is activated in response to receiving the energy of the sensing signal, and transmits a signal; the signal is received by the UE participating in the sensing task and forwarded to the SF via the RAN, thereby terminating the sensing task. The specific process is as follows.

In S1310, a tag on an object transmits a sensing prohibition indication to a UE after receiving a sensing signal.

In S 1320, the UE transmits the sensing prohibition indication, a task identifier (Task ID) of a sensing task currently performed, and sensing task description information to a RAN.

In S1330: the RAN forwards the sensing prohibition indication, the Task ID of the sensing task currently performed and the sensing task description information to the SF.

In S1340: the SF terminates the sensing task, and informs the consumer of a sensing failure indication and a failure reason.

FIG. 13 is described by taking an example in which the tag on the object transmits the sensing prohibition indication, but the sensing prohibition indication may also be transmitted by the object in the present embodiment.

In this way, during a sensing process, the object prohibited from being sensed or the tag on the object may trigger a termination process for the sensing process after receiving the sensing signal, thereby providing a certain degree of privacy protection.

The embodiments of the present disclosure further provide a sensing authorization method. FIG. 14 is a schematic flowchart of a sensing authorization method 1400 according to the embodiments of the present disclosure, and the method may be applied to but is not limited to any one of systems illustrated in FIGS. 1 to 4. The method includes at least some of the following contents.

In S1410: a sensing network element obtains second authorization information of a first object, where the second authorization information of the first object includes at least one of:
characteristic information of the first object;
sensing measurement data of the first object;
a sensing prohibition indication of the first object;
subscription information of the first object; or
a first indication of the first object.

The sensing network element may include an SF.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the subscription information of the first object includes identification information of the first object and/or a second indication of the first object, and the second indication is used to indicate that the first object is permitted to be sensed or prohibited from being sensed.

In some embodiments, the first indication is used to indicate that the first object is permitted to be sensed or prohibited from being sensed.

In some embodiments, the sensing network element obtaining second authorization information of the first object includes:
the sensing network element transmitting identification information of the first object to a first network element; and
the sensing network element receiving the second authorization information of the first object from the first network element.

In some embodiments, the method further includes: the sensing network element receiving identification information of the first object transmitted by the first object or a terminal device associated with the first object.

In some embodiments, the identification information of the first object includes a device identifier.

In some embodiments, the device identifier includes a UE ID, an IoT ID, a Tag ID, or a PINE ID.

The identification information of the first object may include the device identifier. For example, during performance of the sensing task, the sensing network element may receive the second authorization information of the first object, and determine whether to terminate the sensing task being performed by using the received second authorization information of the first object. For example, the sensing network element terminates the sensing task for the first object according to the second authorization information of the first object. For example, in a sensing process, the sensing network element receives a sensing prohibition indication or identification information transmitted by the first object (the first object may be a terminal device such as a UE or an IoT device) or a tag on the first object (the tag may be a terminal device such as a UE or an IoT device). If the sensing prohibition indication is received, the sensing network element may terminate the ongoing sensing task. If the identification information of the first object is received, the identification information of the first object may be used to request the first network element to perform authorization verification, and in a case where the authorization verification fails, the sensing network element may terminate the ongoing sensing task.

In some embodiments, the sensing network element may receive the second authorization information of the first object, and after completing the sensing task, the sensing network element may delete the sensing measurement data of the first object from sensing measurement data obtained after performing the sensing task according to the second authorization information of the first object. For example, the sensing network element receives a sensing request including sensing task description information, obtains sensing measurement data of the first object matching the sensing task description information, and deletes the sensing measurement data of the first object from the sensing measurement data obtained after performing the sensing task. Specifically, the sensing network element may search for the sensing measurement data of the first object matching the sensing task description information from the local. Alternatively, the sensing network element obtains the sensing measurement data of the first object matching the sensing task description information from the first network element. The sensing task description information may include at least one of sensing target area information or sensing time information.

In some other embodiments, the sensing network element may receive the second authorization information of the first object (e.g., the characteristic information of the first object), and after completing the sensing task, the sensing network element may request another network element to delete the sensing measurement data of the first object from the sensing measurement data obtained after the sensing task is performed according to the second authorization information of the first object (e.g., the characteristic information of the first object). For example, the sensing network element transmits the sensing measurement data obtained after performing the sensing task and the characteristic information of the first object to the second network element; and the sensing network element receives first data from the second network element, where the first data includes remaining data after deleting the sensing measurement data of the first object from the sensing measurement data obtained after performing the sensing task. A manner for the sensing network element to obtain the characteristic information of the first object may be that the sensing network element transmits a request to the first network element, where the request includes the sensing task description information; and the sensing network element receives the characteristic information of the first object matching the sensing task description information from the first network element.

The second network element may include an NWDAF, and the NWDAF may identify sensing measurement data corresponding to the characteristic information of the first object (i.e., data of the first object) from the sensing measurement data obtained after performing the sensing task by using AI technology, delete the sensing measurement data from the sensing measurement data obtained after performing the sensing task, and return remaining sensing measurement data to the SF.

In some other embodiments, the sensing network element may terminate the sensing task for the first object according to at least one of the sensing prohibition indication, the subscription information, or the first indication of the first object. For example, the sensing network element transmits the identification information of the first object to the first network element, and receives at least one of the sensing prohibition indication, the subscription information, or the first indication of the first object from the first network element. Before this, the sensing network element may receive the identification information of the first object transmitted by the first object or the terminal device associated with the first object. The identification information of the first object may include a device identifier such as a UE ID, an IoT ID, a tag ID, or a PINE ID. The sensing network element may also receive the sensing prohibition indication transmitted by the first object or the terminal device associated with the first object.

In various methods described above, if the sensing network element terminates the sensing task, the sensing network element may transmit the sensing failure indication. For example, the sensing network element transmits the sensing failure indication to the sensing task initiator (consumer), and the sensing failure indication may include a failure reason.

The embodiments of the present disclosure further provide a sensing authorization method. FIG. 15 is a schematic flowchart of a sensing authorization method 1500 according to the embodiments of the present disclosure, and the method may be applied to but is not limited to any one of systems illustrated in FIGS. 1 to 4. The method includes at least some of the following contents.

In S1510: after receiving a sensing signal, a terminal device transmits a sensing prohibition indication of the terminal device and/or identification information of the terminal device.

In some embodiments, the terminal device includes an IoT device or a UE.

In some embodiments, the identification information of the terminal device includes a UE ID, an IoT ID, a tag ID, or a PINE ID.

The sensing prohibition indication and/or the identification information transmitted by the terminal device may be forwarded to an SF via a RAN. The SF terminates a sensing task according to the received content; alternatively, the SF requests a first network element to perform sensing authorization verification, and terminates the sensing task in a case where the authorization verification fails.

The above-described embodiments are not independent of each other, but may be combined with each other, and the implementations in different embodiments may be reasonably combined, which will not be listed one by one here.

The method provided in the embodiments of the present disclosure may, by means of authorization verification before sensing, data screening after sensing, and detection of prohibited information during sensing, solve a sensing authorization problem in a case where the sensing target is a non-3GPP UE object and a sensing authorization problem of a non-sensing target object within a sensing range, thereby providing a certain degree of privacy protection for a user.

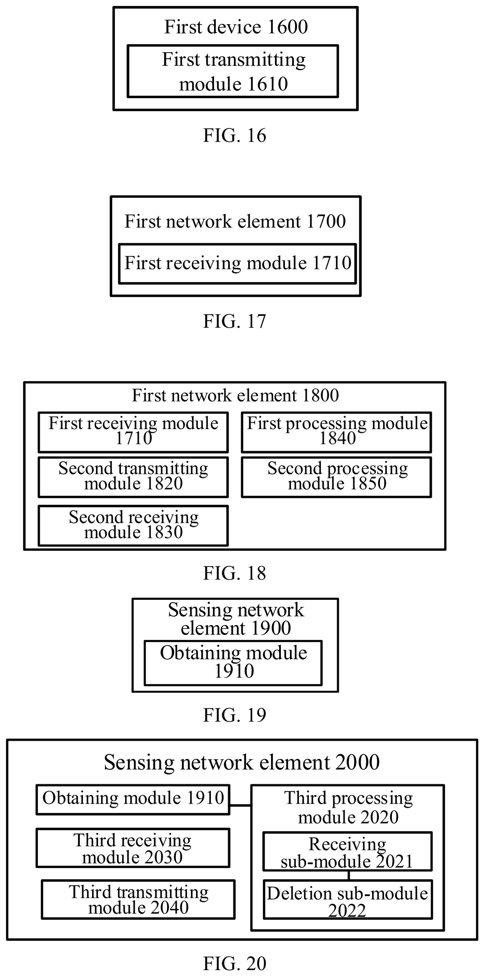

The embodiments of the present disclosure further provide a first device. FIG. 16 is a schematic structural diagram of a first device 1600 according to the embodiments of the present disclosure, and the first device includes:
a first transmitting module 1610, configured to transmit first authorization information of a first object to a first network element, where the first authorization information of the first object includes at least one of:
characteristic information of the first object;
first request information;
subscription information of the first object; or
identification information of the first object and/or a first indication of the first object.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the first request information is used to request the first network element to obtain and store sensing measurement data of the first object.

In some embodiments, the subscription information of the first object includes identification information of the first object and/or a second indication of the first object, and the second indication is used to indicate that the first object is permitted to be sensed or prohibited from being sensed.

In some embodiments, the first indication is used to indicate that the first object is permitted to be sensed or prohibited from being sensed.

In some embodiments, the identification information of the first object includes a device identifier.

In some embodiments, the device identifier includes a UE ID, an IoT device ID, a tag ID, or a PINE ID.

In some embodiments, the first device includes a UE or an AF.

In some embodiments, the first network element includes a core network element.

In some embodiments, the core network element includes an SF, a UDM, or a UDR.

It should be understood that the above and other operations and/or functions of modules in the first device according to the embodiments of the present disclosure are used to implement corresponding flow of the first device in the method 500 in FIG. 5, and details are not repeated here for brevity.

The embodiments of the present disclosure further provide a first network element. FIG. 17 is a schematic structural diagram of a first network element 1700 according to the embodiments of the present disclosure, and the first network element includes:
a first receiving module 1710, configured to receive first authorization information of a first object, where the first authorization information of the first object includes at least one of:
characteristic information of the first object;
first request information;
subscription information of the first object; or
identification information of the first object and/or a first indication of the first object.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the first request information is used to request the first network element to obtain and store sensing measurement data of the first object.

In some embodiments, the subscription information of the first object includes identification information of the first object and/or a second indication of the first object, and the second indication is used to indicate that the first object is permitted to be sensed or prohibited from being sensed.

In some embodiments, the first indication is used to indicate that the first object is permitted to be sensed or prohibited from being sensed.

In some embodiments, the identification information of the first object includes a device identifier.

In some embodiments, the device identifier includes a UE ID, an IoT device ID, a tag ID, or a PINE ID.

FIG. 18 is a schematic structural diagram of a first network element 1800 according to the embodiments of the present disclosure. The first network element 1800 includes one or more features in the embodiments of the first network element 1700 described above. In an possible implementation, the following is further included in the embodiments of the present disclosure:
a second transmitting module 1820, configured to transmit characteristic information and/or sensing measurement data of the first object that match sensing task description information to a sensing network element.

In some embodiments, a second receiving module 1830 is further included, and is configured to receive a sensing request including the sensing task description information, and obtain the characteristic information and/or the sensing measurement data of the first object that match the sensing task description information.

In some embodiments, the sensing task description information includes at least one of sensing target area information or sensing time information.

In some embodiments, the following is further included:
a first processing module 1840, configured to receive the identification information of the first object from a sensing network element; and
a second processing module 1850, configured to transmit second authorization information of the first object to the sensing network element.

In some embodiments, the second processing module 1850 is configured to:
search for the subscription information of the first object or the first indication of the first object according to the identification information of the first object, and transmit the second authorization information of the first object to the sensing network element according to the subscription information of the first object or the first indication of the first object, where the second authorization information of the first object includes a sensing prohibition indication or a sensing permission indication of the first object.

In some embodiments, the second processing module 1850 is configured to search for the subscription information of the first object or the first indication of the first object according to the identification information of the first object, and transmit the second authorization information of the first object to the sensing network element, where the second authorization information of the first object includes the subscription information of the first object or the first indication of the first object.

In some embodiments, the first network element includes a core network element.

In some embodiments, the core network element includes an SF, a UDM, or a UDR.

In some embodiments, the sensing network element includes an SF.

It should be understood that the above and other operations and/or functions of modules in the first network element according to the embodiments of the present disclosure are used to implement corresponding flow of the first network element in the method 700 in FIG. 7, and details are not repeated here for brevity.

The embodiments of the present disclosure further provide a sensing network element. FIG. 19 is a schematic structural diagram of a sensing network element 1900 according to the embodiments of the present disclosure, and the sensing network element includes:
an obtaining module 1910, configured to obtain second authorization information of a first object, where the second authorization information of the first object includes at least one of:
characteristic information of the first object;
sensing measurement data of the first object;
a sensing prohibition indication of the first object;
subscription information of the first object; or
a first indication of the first object.

In some embodiments, the characteristic information of the first object includes at least one of a shape, a size, a material, a temperature, a speed, an orientation, position information permitted to be sensed, time information permitted to be sensed, position information prohibited from being sensed, or time information prohibited from being sensed of the first object.

In some embodiments, the subscription information of the first object includes identification information of the first object and/or a second indication of the first object, and the second indication is used to indicate that the first object is permitted to be sensed or prohibited from being sensed.

In some embodiments, the first indication is used to indicate that the first object is permitted to be sensed or prohibited from being sensed.

In some embodiments, the obtaining module 1910 is configured to:
transmit the identification information of the first object to a first network element; and
receive the second authorization information of the first object from the first network element.

In some embodiments, the obtaining module 1910 is further configured to receive identification information of the first object transmitted by the first object or a terminal device associated with the first object.

In some embodiments, the identification information of the first object includes a device identifier.

In some embodiments, the device identifier includes a UE ID, an IoT device ID, a tag ID, or a PINE ID.

FIG. 20 is a schematic structural diagram of a sensing network element 2000 according to the embodiments of the present disclosure. The sensing network element 2000 includes one or more features in the embodiments of the sensing network element 1900 described above. In an possible implementation, the following is further included in the embodiments of the present disclosure:
a third processing module 2020, configured to:
delete, according to the second authorization information of the first object, the sensing measurement data of the first object from sensing measurement data obtained after performing a sensing task; or
terminate the sensing task for the first object according to the second authorization information of the first object.

In some embodiments, the third processing module 2020 includes:
a receiving sub-module 2021, configured to receive a sensing request including sensing task description information, and obtain sensing measurement data of the first object that matches the sensing task description information; and
a deletion sub-module 2022, configured to delete the sensing measurement data of the first object from the sensing measurement data obtained after the sensing task is performed.

In some embodiments, the receiving sub-module 2021 is configured to:
search for the sensing measurement data of the first object that matches the sensing task description information from a local; or
obtain the sensing measurement data of the first object that matches the sensing task description information from a first network element.

In some embodiments, the third processing module 2020 is configured to:
transmit the sensing measurement data obtained after performing the sensing task and characteristic information of the first object to a second network element; and
receive first data from the second network element, where the first data includes remaining data after the sensing measurement data of the first object is deleted from the sensing measurement data obtained after performing the sensing task.

In some embodiments, the obtaining module 1910 is configured to:
transmit a request to the first network element, the request including the sensing task description information; and
receive characteristic information of the first object that matches the sensing task description information from the first network element.

In some embodiments, the second network element includes an NWDAF.

In some embodiments, the sensing task description information includes at least one of sensing target area information or sensing time information.

In some embodiments, the third processing module 2020 is configured to terminate the sensing task for the first object according to at least one of the sensing prohibition indication, the subscription information, or the first indication of the first object.

In some embodiments, the third processing module 2020 is configured to:
transmit identification information of the first object to the first network element; and
receive at least one of the sensing prohibition indication, the subscription information or the first indication of the first object from the first network element.

In some embodiments, a third receiving module 2030 is further included, and is configured to receive identification information of the first object transmitted by the first object or a terminal device associated with the first object.

In some embodiments, the identification information of the first object includes a device identifier.

In some embodiments, the device identifier includes a UE ID, an IoT device ID, a tag ID, or a PINE ID.

In some embodiments, the third processing module 2020 is configured to receive a sensing prohibition indication transmitted by the first object.

In some embodiments, a third transmitting module 2040 is further included, and is configured to transmit a sensing failure indication.

It should be understood that the above and other operations and/or functions of modules in the sensing network element according to the embodiments of the present disclosure are used to implement corresponding flow of the sensing network element in the method 1400 in FIG. 14, and details are not repeated here for brevity.

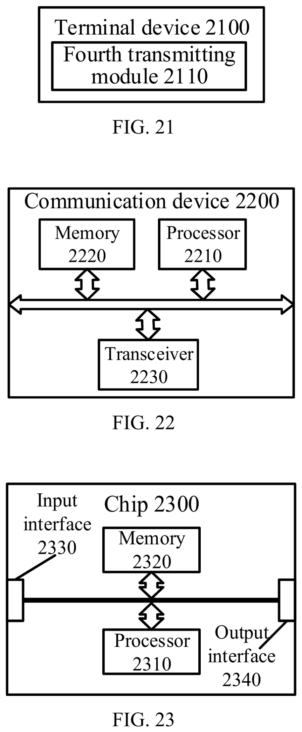

The embodiments of the present disclosure further provide a terminal device. FIG. 21 is a schematic structural diagram of a terminal device 2100 according to the embodiments of the present disclosure, and the terminal device includes:
a fourth transmitting module 2110, configured to transmit a sensing prohibition indication of the terminal device and/or identification information of the terminal device in response to receiving a sensing signal.

In some embodiments, the terminal device includes an IoT device or a UE.

In some embodiments, the identification information of the terminal device includes a UE ID, an Internet of Things device ID, a tag ID, or a PINE ID.

It should be understood that the above and other operations and/or functions of modules in the terminal device according to the embodiments of the present disclosure are used to implement corresponding flow of the terminal device in the method 1500 in FIG. 15, and details are not repeated here for brevity.

It shall be noted that functions of various modules (sub-modules, units, or components) in the communication device in the embodiments of the present disclosure may be implemented by different modules (sub-modules, units, or components), or by a same module (sub-module, unit, or component). For example, the first receiving module and the second receiving module may be different modules or the same module, and both of them can implement the corresponding functions in the embodiments of the present disclosure. In addition, the transmitting module and the receiving module in the embodiments of the present disclosure may be implemented by a transceiver of the device, and some or all of remaining modules may be implemented by a processor of the device.

FIG. 22 is a schematic structural diagram of a communication device 2200 according to the embodiments of the present disclosure. The communication device 2200 illustrated in FIG. 22 includes a processor 2210, and the processor 2210 may invoke a computer program from a memory and run the computer program to implement the method in the embodiments of the present disclosure.

In some embodiments, as illustrated in FIG. 22, the communication device 2200 may further include a memory 2220. Here, the processor 2210 may invoke a computer program from the memory 2220 and run the computer program to implement method in the embodiments of the present disclosure.

The memory 2220 may be a separate device independent of the processor 2210 or may be integrated in the processor 2210.

In some embodiments, as illustrated in FIG. 22, the communication device 2200 may further include a transceiver 2230, and the processor 2210 may control the transceiver 2230 to communicate with other devices. Specifically, the processor 2210 may control the transceiver 2230 to transmit information or data to other devices, or receive information or data transmitted by other devices.

Here, the transceiver 2230 may include a transmitter and a receiver. The transceiver 2230 may further include an antenna, and there may be one or more antennas.

In some embodiments, the communication device 2200 may be the communication device in the embodiments of the present disclosure, and the communication device 2200 may implement a corresponding procedure implemented by the communication device in each method in the embodiments of the present disclosure, and details are not repeated here for brevity.

FIG. 23 is a schematic structural diagram of a chip 2300 according to the embodiments of the present disclosure. The chip 2300 illustrated in FIG. 23 includes a processor 2310, and the processor 2310 may invoke a computer program from a memory and run the computer program to implement the method in the embodiments of the present disclosure.

In some embodiments, as illustrated in FIG. 23, the chip 2300 may further include a memory 2320. Here, the processor 2310 may invoke a computer program from the memory 2320 and run the computer program to implement the method in the embodiments of the present disclosure.

The memory 2320 may be a separate device independent of the processor 2310 or may be integrated in the processor 2310.

In some embodiments, the chip 2300 may further include an input interface 2330. The processor 2310 may control the input interface 2330 to communicate with other devices or chips. Specifically, the processor 2310 may control the input interface 2330 to obtain information or data transmitted by other devices or chips.

In some embodiments, the chip 2300 may further include an output interface 2340. The processor 2310 may control the output interface 2340 to communicate with other devices or chips. Specifically, the processor 2310 may control the output interface 2340 to output information or data to other devices or chips.

In some embodiments, the chip may be applied to the communication device in the embodiments of the present disclosure, and the chip may implement a corresponding procedure implemented by the network device in each method of the embodiments of the present disclosure, and details are not repeated here for brevity.

It shall be understood that the chip mentioned in the embodiments of the present disclosure may also be referred to as a system-level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. Here, the general-purpose processor mentioned above may be a microprocessor or any conventional processor or the like.

The memory mentioned above may be a volatile memory or a non-volatile memory, or both the volatile memory and the non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM).

It shall be understood that the memory described above is illustrative description but not limiting description. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct memory bus random access memory (direct rambus RAM, DR RAM). That is, the memory in the embodiments of the present disclosure is intended to include but not limited to these and any other suitable type of memory.

The above embodiments may be implemented in whole or in part by software, hardware, firmware or any combination thereof. When implemented using software, the embodiments may be implemented in whole or in part in a form as a computer program product. The computer program product includes one or more computer instructions. When the computer program instructions are loaded on and executed by a computer, processes or functions described in the embodiments of the present disclosure are generated in whole or in part. The computer may be a general-purpose computer, a dedicated computer, a computer network, or any other programmable device. The computer instructions may be stored in a computer-readable storage medium. Alternatively, the computer instructions may be transmitted from a computer-readable storage medium to another computer-readable storage medium. For example, the computer instructions may be transmitted from a website, a computer, a server, or a data center to another website, another computer, another server, or another data center via a wired manner (e.g., a coaxial cable, an optical fiber, a digital subscriber line (DSL)) or a wireless manner (e.g., an infrared, radio or microwave manner). The computer-readable storage medium may be any available medium accessible by a computer, or the computer-readable storage medium may be a data storage device such as a server or a data center that includes one or more available mediums integrated. The available medium may be a magnetic medium (e.g., a floppy disk, a hard disk, or a magnetic tape), an optical medium (e.g., a digital video disc (DVD)), or a semiconductor medium (e.g., a solid state disk (SSD)), etc.

It shall be understood that in various embodiments of the present disclosure, values of serial numbers of each of aforementioned processes do not mean an execution order. The execution order of each process shall be determined by its function and internal logic, and shall not constitute any limitation on an implementation process of the embodiments of the present disclosure.

Those skilled in the art may clearly understand that for the convenience and simplicity of description, specific working processes of the systems, devices and units described above may refer to the corresponding processes in the above method embodiments, and details are not repeated here.

The above description is only specific implementations of the present disclosure, but the protection scope of the present disclosure is not limited thereto. Changes or replacements that any person skilled in the art could readily conceive of within the technical scope of the present disclosure shall be included in the protection scope of the present disclosure. Therefore, the protection scope of the present disclosure shall be subject to the protection scope of the claims.

## Claims

1. A sensing authorization method, comprising:
transmitting, by a first device, first authorization information of a first object to a first network element, wherein the first authorization information of the first object comprises at least one of:
characteristic information of the first object;
first request information;
subscription information of the first object; or
identification information of the first object and/or a first indication of the first object.

2. The method according to claim 1, wherein the characteristic information of the first object comprises at least one of a shape, a size, a material, a temperature, a speed, an orientation, position information permitted to be sensed, time information permitted to be sensed, position information prohibited from being sensed, or time information prohibited from being sensed of the first object.

3. The method according to claim 1 or 2, wherein the first request information is used to request the first network element to determine sensing measurement data of the first object.

4. The method according to any one of claims 1 to 3, wherein the subscription information of the first object comprises the identification information of the first object and/or a second indication of the first object, and the second indication is used to indicate that the first object is permitted to be sensed or prohibited from being sensed.

5. The method according to any one of claims 1 to 4, wherein the first indication is used to indicate that the first object is permitted to be sensed or prohibited from being sensed.

6. The method according to any one of claims 1 to 5, wherein the identification information of the first object comprises a device identifier.

7. The method according to claim 6, wherein the device identifier comprises a user equipment (UE) ID, an Internet of Things (IoT) device ID, a tag ID, or a personal IoT network element (PINE) ID.

8. The method according to any one of claims 1 to 7, wherein the first device comprises a UE or an application function (AF).

9. The method according to any one of claims 1 to 7, wherein the first network element comprises a core network element.

10. The method according to claim 9, wherein the core network element comprises a sensing function (SF), a unified data management (UDM), or a unified data repository (UDR).

11. A sensing authorization method, comprising:
receiving, by a first network element, first authorization information of a first object, wherein the first authorization information of the first object comprises at least one of:
characteristic information of the first object;
first request information;
subscription information of the first object; or
identification information of the first object and/or a first indication of the first object.

12. The method according to claim 11, wherein the characteristic information of the first object comprises at least one of a shape, a size, a material, a temperature, a speed, an orientation, position information permitted to be sensed, time information permitted to be sensed, position information prohibited from being sensed, or time information prohibited from being sensed of the first object.

13. The method according to claim 11 or 12, wherein the first request information is used to request the first network element to determine sensing measurement data of the first object.

14. The method according to any one of claims 11 to 13, wherein the subscription information of the first object comprises the identification information of the first object and/or a second indication of the first object, and the second indication is used to indicate that the first object is permitted to be sensed or prohibited from being sensed.

15. The method according to any one of claims 11 to 14, wherein the first indication is used to indicate that the first object is permitted to be sensed or prohibited from being sensed.

16. The method according to any one of claims 11 to 15, wherein the identification information of the first object comprises a device identifier.

17. The method according to claim 16, wherein the device identifier comprises a user equipment (UE) ID, an Internet of Things (IoT) device ID, a tag ID, or a personal IoT network element (PINE) ID.

18. The method according to any one of claims 11 to 17, further comprising:
transmitting, by the first network element, the characteristic information and/or sensing measurement data of the first object that match sensing task description information to a sensing network element.

19. The method according to any one of claims 11 to 17, further comprising:
receiving, by the first network element, a sensing request comprising sensing task description information, and obtaining, by the first network element, the characteristic information and/or sensing measurement data of the first object that match sensing task description information.

20. The method according to claim 18 or 19, wherein the sensing task description information comprises at least one of sensing target area information or sensing time information.

21. The method according to any one of claims 11 to 17, further comprising,
receiving, by the first network element, the identification information of the first object from a sensing network element; and
transmitting, by the first network element, second authorization information of the first object to the sensing network element.

22. The method according to claim 21, wherein transmitting, by the first network element, the second authorization information of the first object to the sensing network element comprises:
searching for the subscription information of the first object or the first indication of the first object according to the identification information of the first object, and transmitting the second authorization information of the first object to the sensing network element according to the subscription information of the first object or the first indication of the first object, wherein the second authorization information of the first object comprises a sensing prohibition indication or a sensing permission indication of the first object.

23. The method according to claim 21, wherein transmitting, by the first network element, the second authorization information of the first object to the sensing network element comprises:
searching for, by the first network element, the subscription information of the first object or the first indication of the first object according to the identification information of the first object, and transmitting, by the first network element, the second authorization information of the first object to the sensing network element, wherein the second authorization information of the first object comprises the subscription information of the first object or the first indication of the first object.

24. The method according to any one of claims 11 to 23, wherein the first network element comprises a core network element.

25. The method according to claim 24, wherein the core network element comprises a sensing function (SF), a unified data management (UDM), or a unified data repository (UDR).

26. The method according to claim 18 or 21, wherein the sensing network element comprises an SF.

27. A sensing authorization method, comprising:
obtaining, by a sensing network element, second authorization information of a first object, wherein the second authorization information of the first object comprises at least one of:
characteristic information of the first object;
sensing measurement data of the first object;
a sensing prohibition indication of the first object;
subscription information of the first object; or
a first indication of the first object.

28. The method according to claim 27, wherein the characteristic information of the first object comprises at least one of a shape, a size, a material, a temperature, a speed, an orientation, position information permitted to be sensed, time information permitted to be sensed, position information prohibited from being sensed, or time information prohibited from being sensed of the first object.

29. The method according to claim 27 or 28, wherein the subscription information of the first object comprises identification information of the first object and/or a second indication of the first object, and the second indication is used to indicate that the first object is permitted to be sensed or prohibited from being sensed.

30. The method according to any one of claims 27 to 29, wherein the first indication is used to indicate that the first object is permitted to be sensed or prohibited from being sensed.

31. The method according to any one of claims 27 to 30, wherein obtaining, by the sensing network element, the second authorization information of the first object comprises:
transmitting, by the sensing network element, identification information of the first object to a first network element; and
receiving, by the sensing network element, the second authorization information of the first object from the first network element.

32. The method according to claim 31, further comprising:
receiving, by the sensing network element, the identification information of the first object transmitted by the first object or a terminal device associated with the first object.

33. The method according to claim 31 or 32, wherein the identification information of the first object comprises a device identifier.

34. The method according to claim 33, wherein the device identifier comprises a user equipment (UE) ID, an Internet of Things (IoT) ID, a tag ID, or a personal IoT network element (PINE) ID.

35. The method according to any one of claims 27 to 34, further comprising:
deleting, by the sensing network element according to the second authorization information of the first object, the sensing measurement data of the first object from sensing measurement data obtained after performing a sensing task; or
terminating, by the sensing network element, sensing task for the first object according to the second authorization information of the first object.

36. The method according to claim 35, wherein deleting, by the sensing network element according to the second authorization information of the first object, the sensing measurement data of the first object from the sensing measurement data obtained after performing the sensing task comprises:
receiving, by the sensing network element, a sensing request comprising sensing task description information, and obtaining, by the sensing network element, sensing measurement data of the first object that matches the sensing task description information; and
deleting, by the sensing network element, the sensing measurement data of the first object from the sensing measurement data obtained after performing the sensing task.

37. The method according to claim 36, wherein obtaining, by the sensing network element, the sensing measurement data of the first object that matches the sensing task description information comprises:
searching for, by the sensing network element, the sensing measurement data of the first object that matches the sensing task description information from a local; or
obtaining, by the sensing network element, the sensing measurement data of the first object that matches the sensing task description information from a first network element.

38. The method according to claim 35, wherein deleting, by the sensing network element according to the second authorization information of the first object, the sensing measurement data of the first object from the sensing measurement data obtained after performing the sensing task comprises:
transmitting, by the sensing network element, the sensing measurement data obtained after performing the sensing task and the characteristic information of the first object to a second network element; and
receiving, by the sensing network element, first data from the second network element, the first data comprising remaining data after the sensing measurement data of the first object is deleted from the sensing measurement data obtained after performing the sensing task.

39. The method according to claim 38, wherein the second network element comprises a network data analytics function (NWDAF).

40. The method according to claim 36 or 37, wherein the sensing task description information comprises at least one of sensing target area information or sensing time information.

41. The method according to claim 35, wherein terminating, by the sensing network element, the sensing task for the first object according to the second authorization information of the first object comprises:
terminating, by the sensing network element, the sensing task for the first object according to at least one of the sensing prohibition indication, the subscription information, or the first indication of the first object.

42. The method according to claim 30, wherein obtaining, by the sensing network element, the sensing prohibition indication of the first object comprises:
receiving, by the sensing network element, the sensing prohibition indication transmitted by the first object or a terminal device associated with the first object.

43. The method according to any one of claims 30 to 42, further comprising:
transmitting, by the sensing network element, a sensing failure indication.

44. A sensing authorization method, comprising:
transmitting, by a terminal device, a sensing prohibition indication of the terminal device and/or identification information of the terminal device in response to receiving a sensing signal.

45. The method according to claim 44, wherein the terminal device comprises an Internet of Things (IoT) device or a user equipment (UE).

46. The method according to claim 44 or 45, wherein the identification information of the terminal device comprises a UE ID, an Internet of Things device ID, a tag ID, or a personal IoT network element (PINE) ID.

47. A first device, comprising:
a first transmitting module, configured to transmit first authorization information of a first object to a first network element, wherein the first authorization information of the first object comprises at least one of:
characteristic information of the first object;
first request information;
subscription information of the first object; or
identification information of the first object and/or a first indication of the first object.

48. A first network element, comprising:
a first receiving module, configured to receive first authorization information of a first object, wherein the first authorization information of the first object comprises at least one of:
characteristic information of the first object;
first request information;
subscription information of the first object; or
identification information of the first object and/or a first indication of the first object.

49. A sensing network element, comprising:
an obtaining module, configured to obtain second authorization information of a first object, wherein the second authorization information of the first object comprises at least one of:
characteristic information of the first object;
sensing measurement data of the first object;
a sensing prohibition indication of the first object;
subscription information of the first object; or
a first indication of the first object.

50. A terminal device comprising:
a fourth transmitting module, configured to transmit a sensing prohibition indication of the terminal device and/or identification information of the terminal device in response to receiving a sensing signal.

51. A communication device, comprising a processor, a memory and a transceiver, wherein the memory is configured to store a computer program, and the processor is configured to invoke and run a computer program stored in the memory and control the transceiver to perform the method according to any one of claims 1 to 10, 11 to 26, 27 to 43, or 44 to 46.

52. A chip, comprising a processor, configured to invoke a computer program from a memory and run the computer program, to enable a device equipped with the chip to perform the method according to any one of claims 1 to 10, 11 to 26, 27 to 43, or 44 to 46.

53. A computer readable storage medium, configured to store a computer program, and the computer program enables a computer to perform the method according to any one of claims 1 to 10, 11 to 26, 27 to 43, or 44 to 46.

54. A computer program product, comprising computer program instructions, and the computer program instructions enable a computer to perform the method according to any one of claims 1 to 10, 11 to 26, 27 to 43, or 44 to 46.

55. A computer program, wherein the computer program enables a computer to perform the method according to any one of claims 1 to 10, 11 to 26, 27 to 43, or 44 to 46.
